(19) Europäisches Patentamt

European Patent Office

Office européen des brevets

(11) **EP 2 884 499 B1**

(12) **EUROPEAN PATENT SPECIFICATION**

(45) Date of publication and mention
of the grant of the patent:
**20.02.2019 Bulletin 2019/08**

(51) Int Cl.:
*H01B 1/06* (2006.01)          *H01B 1/08* (2006.01)
*H01B 1/10* (2006.01)

(21) Application number: **14197479.0**

(22) Date of filing: **11.12.2014**

(54) **Electrically conductive thin films and electronic device**

Elektrisch leitfähige Dünnschichten und elektronische Vorrichtung

Films minces électriquement conducteurs et dispositif électronique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2013 KR 20130154946**

(43) Date of publication of application:
**17.06.2015 Bulletin 2015/25**

(73) Proprietor: **Samsung Electronics Co., Ltd.
Gyeonggi-do 443-742 (KR)**

(72) Inventors:
 • **Son, Yoon Chul
   Gyeonggi-do, (KR)**
 • **Ryu, Byungki
   Gyeonggi-do, (KR)**
 • **Lee, Sang Mock
   Gyeonggi-do, (KR)**

(74) Representative: **Elkington & Fife LLP
Prospect House
8 Pembroke Road
Sevenoaks, Kent TN13 1XR (GB)**

(56) References cited:
**EP-A2- 0 905 273     US-A1- 2009 073 640**

 • **INUMARU K ET AL: "Synthesis and high metallic
   conductivity of layer-structured Sr2N thin film
   deposited onto MgO(001) substrate", JOURNAL
   OF ALLOYS AND COMPOUNDS, ELSEVIER
   SEQUOIA, LAUSANNE, CH, vol. 372, no. 1-2, 9
   June 2004 (2004-06-09), pages L1-L3,
   XP004509374, ISSN: 0925-8388, DOI:
   10.1016/J.JALLCOM.2003.08.100**
 • **KIMOON LEE ET AL: "Dicalcium nitride as a
   two-dimensional electride with an anionic
   electron layer", NATURE, vol. 494, no. 7437, 30
   January 2013 (2013-01-30), pages 336-340,
   XP055183632, ISSN: 0028-0836, DOI:
   10.1038/nature11812**
 • **ROBERT L ABDON ET AL: "Hf,Te,: A New and
   Remarkable Layered Compound",
   ANGEWANDTE CHEMIE INTERNATIONAL
   EDITION IN ENGLISH, vol. 33, no. 22, 1 December
   1994 (1994-12-01), pages 2328-2330,
   XP055183703,**

EP 2 884 499 B1

**Description**

FIELD OF THE INVENTION

Transparent electrically conductive films and an electronic device including the same are disclosed.

BACKGROUND OF THE INVENTION

An electronic device like a flat panel display such as an LCD or LED, a touch screen panel, a solar cell, a transparent transistor, and the like includes a transparent electrically conductive film. A material for an electrically conductive film may be required to have, for example, high light transmittance of greater than or equal to about 80 % in a visible light region and low specific resistance of less than or equal to about $1 \times 10^{-3}$ $\Omega*$cm. Currently available materials for transparent and electrically conductive films include indium tin oxide (ITO), tin oxide ($SnO_2$), zinc oxide (ZnO), and the like. The ITO has poor flexibility, and limited reserves of the indium will inevitably cause a cost increase. Therefore, development of an alternative material is desperately required. Tin oxide and zinc oxide show low conductivity and have poor flexibility. Inumaru et al in J. All. Com. 372(2004)L1-L3 studies the conductivity of layer-structured $Sr_2N$ thin film. EP0905273 discloses background electronic devices with transparent electrode comprising conductive films including ITO, $SnO_2$ or ZnO.

Therefore, there is an urgent need to develop transparent conducting films having excellent flexibility, higher transparency, and enhanced conductivity.

SUMMARY OF THE INVENTION

One embodiment provides an electronic device comprising a transparent electrode, characterized in tha the transparent electrode comprises a conductive film having high conductivity and excellent light transmittance.

In one embodiment, an electrically conductive film includes a compound having a layered crystal structure, the compound being selected from:

a transition metal suboxide represented by $M_2O$ (wherein M is Sc, Y, Ti, Zr, Hf, V, Nb, Ta, Cr, Mo, W, Mn, Tc, Re, Ag or a combination thereof)
an alkali metal suboxide represented by $A_3O$, $A_2O$, $A_6O$, or $A_7O$ (wherein A is Cs, Rb, K, Na, or a combination thereof);
an alkali earth metal subnitride represented by $AE_2N$ (wherein AE is Mg, Ba, or a combination thereof) or $AE_3N$ (wherein AE is Mg, Ca, Sr, Ba, or a combination thereof);
a transition element subcarbide represented by $M_2C$ or $M_4C$ (wherein M is Sc, Y, Ti, Zr, Hf, V, Nb, Ta, Cr, Mo, W, Mn, Tc, Re, Ag, or a combination thereof);
a transition metal rich chalcogenide represented by $M_3E_2$, $M_2E$, $M_5E$, $M_5E_2$, $M_4E_3$, or ME (wherein M is Sc, Y, Ti, Zr, Hf, V, Nb, Ta, Cr, Mo, W, Mn, Tc, Re, Ag, or a combination thereof and E is S, Se, or Te); or
a transition metal subhalide represented by $M_2X$ or MX (wherein M is Sc, Y, Ti, Zr, Hf, V, Nb, Ta, Mn, Tc, Re, Ag, or a combination thereof, and X is F, Cl, Br, or I).

The compound may have a product of an absorption coefficient ($\alpha$) for light having a wavelength of about 550 nm at 25 °C and a resistivity value ($\rho$) thereof of less than or equal to about 30 $\Omega/\square$.

The compound may have a product of an absorption coefficient ($\alpha$) for light having a wavelength of about 550 nm at 25 °C and a resistivity value ($\rho$) thereof of less than or equal to about 5 $\Omega/\square$.

The compound may have a two-dimensional electron gas layer. The two-dimensional electron gas layer may be present between unit structures of the compound or within a unit structure of the compound.

The electrically conductive film may have transmittance of greater than or equal to about 80 % for light at a wavelength of about 550 nm at a thickness of less than or equal to about 100 nm.

The layered crystal structure may belong to a trigonal system with a P-3m1 space group, a trigonal system with a R3-MH space group, a tetragonal system with a I4/MMM space group, or a hexagonal system with a P63/mcm space group.

The binding energy between the unit structures of the compound may be less than or equal to about 100 meV/Å$^2$.

The compound may be selected from $Ag_2F$, $Cs_3O$, $Hf_3Te_2$, $(Ta, Nb)_5S_2$, $Y_2C$, $Ti_2O$, $Ba_2N$, $Nb_2C$, $Ba_3N$, $Ta_2Se$, and a combination thereof.

The electrically conductive film may have a thickness of less than or equal to about 100 nm.

The electrically conductive film may include a continuous film formed by a vapor deposition process.

The electrically conductive film may include a plurality of nanosheets including the compound, and the nanosheets contact one another to provide an electrical connection. The electrically conductive film may be a discontinuous film having a gap therein.

The electronic device may be a display, a touch screen panel, a solar cell, an e-window, an electrochromic mirror, a heat mirror, a transparent transistor, or a flexible display.

According to the embodiments, a transparent conductive material that has conductivity far higher than that of the ITO electrode, enhanced light transmittance, and excellent flexibility is provided.

BRIEF DESCRIPTION OF THE DRAWINGS

FIG. 1 is a view schematically illustrating a crystal structure of $Ba_2N$.

FIG. 2 is a view schematically illustrating a crystal structure of $Cs_3O$.

FIG. 3 is a view schematically illustrating a crystal structure of $Hf_3Te_2$.

FIG. 4 is a view schematically illustrating a crystal structure of $Ta_2Se$.

FIG. 5 is a view schematically illustrating a crystal structure of $(Ta, Nb)_5S_2$.

FIG. 6 is a view schematically illustrating a density of state (DOS) of $Cs_3O$.

FIG. 7 is a view showing the calculation results of the conductivity of $Cs_3O$.

FIG. 8 is a view showing the calculation results of the absorption coefficient of $Cs_3O$.

FIG. 9 includes graphs of a product of sheet resistance and light transmittance versus changes of the sheet resistance for ITO and graphene.

FIG. 10 is a cross-sectional view of an organic light emitting diode device including an electrically conductive thin film according to one embodiment.

FIG. 11 is a TEM image of a $Hf_3Te_2$ thin film prepared in Example 1.

FIG. 12 is a view showing the charge distribution of $Sr_2N$, which is calculated via a simulation process and confirms the presence of the two-dimensional electron gas layer.

FIG. 13 is a view showing the charge distribution of $Y_2C$, which is calculated via a simulation process and confirms the presence of the two-dimensional electron gas layer.

DETAILED DESCRIPTION OF THE EMBODIMENTS

Advantages and characteristics of this disclosure, and a method for achieving the same, will become evident referring to the following exemplary embodiments together with the drawings attached hereto. However, this disclosure may be embodied in many different forms and is not to be construed as limited to the embodiments set forth herein; rather, these embodiments are provided so that this disclosure will satisfy applicable legal requirements. Therefore, in some embodiments, well-known process technologies are not explained in detail in order to avoid vague interpretation of the present invention. If not defined otherwise, all terms (including technical and scientific terms) in the specification may be defined as commonly understood by one skilled in the art. The terms defined in a generally-used dictionary may not be interpreted ideally or exaggeratedly unless clearly defined. In addition, unless explicitly described to the contrary, the word "comprise" and variations such as "comprises" or "comprising" will be understood to imply the inclusion of stated elements but not the exclusion of any other elements.

Further, the singular includes the plural unless mentioned otherwise.

In the drawings, the thickness of layers, regions, etc., are exaggerated for clarity. Like reference numerals designate like elements throughout the specification.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

As used herein, the term "suboxide" refers to a class of oxides wherein the electropositive element (e.g., a metal element) is in excess relative to the "normal" oxides.

As used herein, the term "subnitride" refers to a class of nitrides wherein the electropositive element (e.g., a metal element) is in excess relative to the "normal" nitrides.

As used herein, the term "subcarbide" refers to a class of carbides wherein the electropositive element (e.g., a metal element) is in excess relative to the "normal" carbides.

As used herein, the term "subhalide" refers to a class of halides wherein the electropositive element (e.g., a metal element) is in excess relative to the "normal" halides.

As used herein, the term "two dimensional electron gas (2-DEG)" refers to gas of electrons free to move in two dimensions, but tightly confined in the third. As used herein, the term "unit structure" may refer to "the smallest layered structure" repeating in the crystal structure.

In an embodiment, an electrically conductive film includes a compound having a layered crystal structure. The compound may be selected from:

a transition metal suboxide represented by $M_2O$ (wherein M may be a transition metal such as Ti Sc, Y, Zr, Hf, V, Nb, Ta, Cr, Mo, W, Mn, Tc, Re, Ag or a combination thereof)

an alkali metal suboxide represented by $A_3O$, $A_2O$, $A_6O$, or $A_7O$ (wherein A is Cs, Rb, K, Na, or a combination thereof);

an alkali earth metal subnitride represented by $AE_2N$ (wherein AE is Mg, Ba, or a combination thereof) or $AE_3N$ (wherein AE is Mg, Ca, Sr, Ba, or a combination thereof);

a transition element subcarbide represented by $M_2C$ or $M_4C$ (wherein M is Sc, Y, Ti, Zr, Hf, V, Nb, Ta, Cr, Mo, W, Mn, Tc, Re, Ag, or a combination thereof);

a transition metal rich chalcogenide represented by $M_3E_2$, $M_2E$, $M_5E$, $M_5E_2$, $M_4E_3$, or ME (wherein M is Sc, Y, Ti, Zr, Hf, V, Nb, Ta, Cr, Mo, W, Mn, Tc, Re, Ag, or a combination thereof and E is S, Se, or Te); or

a transition metal subhalide represented by $M_2X$ or MX (wherein M is Sc, Y, Ti, Zr, Hf, V, Nb, Ta, Mn, Tc, Re, Ag, or a combination thereof, and X is F, Cl, Br, or I).

The compound may have a two-dimensional electron gas layer. The compound may have a product of an absorption coefficient ($\alpha$) for light having a wavelength of about 550 nm at 25 °C and specific resistivity ($\rho$) thereof of less than or equal to about 30 $\Omega/\square$. In an embodiment, the compound may have a product of an absorption coefficient ($\alpha$) for light having a wavelength of about 550 nm at 25 °C and specific resistivity ($\rho$) thereof of less than or equal to about 5 $\Omega/\square$.

In some embodiments, the compound may be selected from $Ag_2F$, $Cs_3O$, $Hf_3Te_2$, $(Ta, Nb)_5S_2$, $Y_2C$, $Ti_2O$, $Ba_2N$, $Nb_2C$, $Ba_3N$, $Ta_2Se$, and a combination thereof.

The compound has a layered crystal structure. The layered crystal structure may include at least two layers of metal atoms in a repeating unit structure. In some embodiments, the layered crystal structure of the compound may have two, three, four, or five layers of metal atoms in the repeating unit structure.

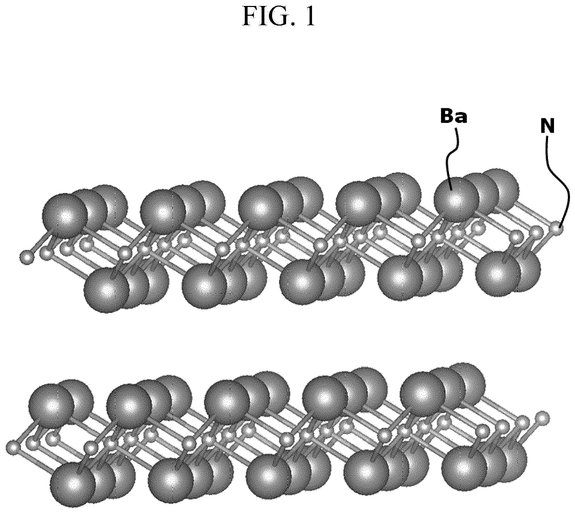

In an embodiment, the layered crystal structure of the compound may have a repeating unit structure with two layers of metal atoms and one layer of anionic elements (e.g., one layer of nitrogen atoms) therebetween. The transparent electrically conductive film including such a compound may have a two-dimensional electron gas layer being present between the repeating unit structures. Examples of the compounds having such a layered crystal structure may include a transition metal subfluoride such as $Ag_2F$, an alkali earth metal subnitride such as and $Ba_2N$, a transition metal subcarbide such as $Y_2C$ and $Nb_2C$, and a transition metal suboxide such as $Ti_2O$. For example, the layered crystal structure of the $Ba_2N$ includes a repeating unit structure having two layers of the Ba atoms and one layer of the nitrogen atoms therebetween, and the two-dimensional electron gas layer is present between the repeating unit structures (see FIG. 1). The repeating unit structure is believed to be bonded by an electrostatic force and the bonding energy between the repeating unit structures may be less than or equal to about 100 $meV/Å^2$, for example, less than or equal to about 60 $meV/Å^2$.

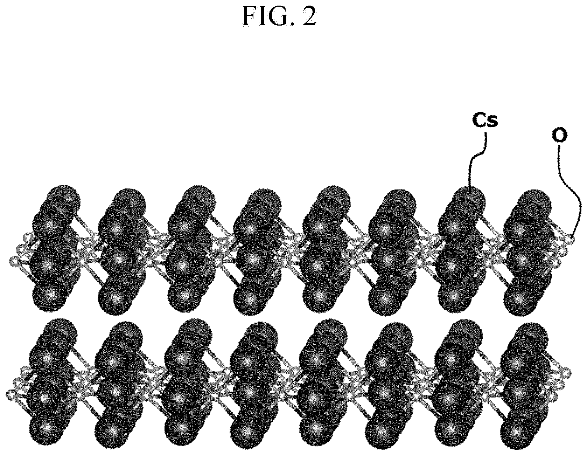

In some embodiments, the layered crystal structure of the compound may have a repeating unit structure wherein three parallel layers of metal atoms exist and anionic elements (e.g., one layer of nitrogen atoms) are distributed between the metal layers. By way of an example, the layered crystal structure of the $Cs_3O$ includes a repeating unit structure wherein three layers of the Cs atoms exist and oxygen atoms are present adjacent to the Cs atoms constituting the middle layer of the Cs atoms (see FIG. 2). The transparent electrically conductive film including such a compound may have a two-dimensional electron gas layer being present between the repeating unit structures. Examples of the compounds having such a layered crystal structure may include an alkali metal suboxide such as $Cs_3O$ and an alkaline earth metal subnitride such as $Ba_3N$. The repeating unit structure is believed to be bonded by an electrostatic force and the bonding energy between the repeating unit structures may be less than or equal to about 100 $meV/Å^2$, for example, less than or equal to about 60 $meV/Å^2$.

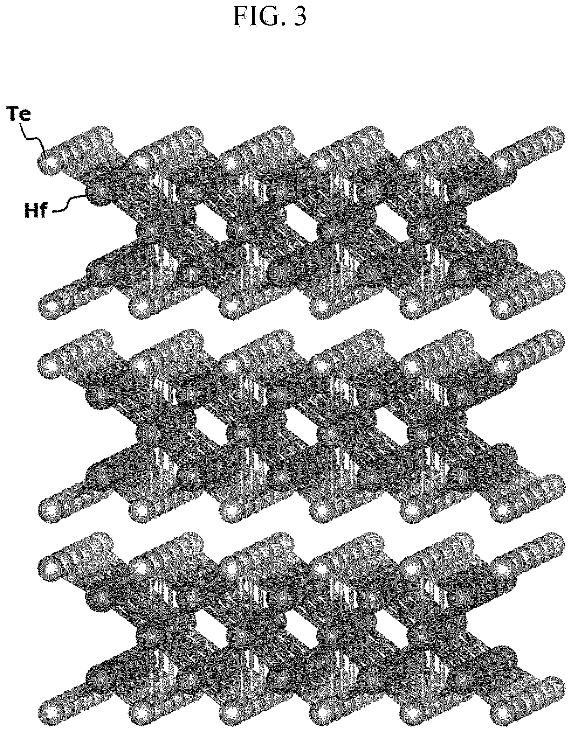

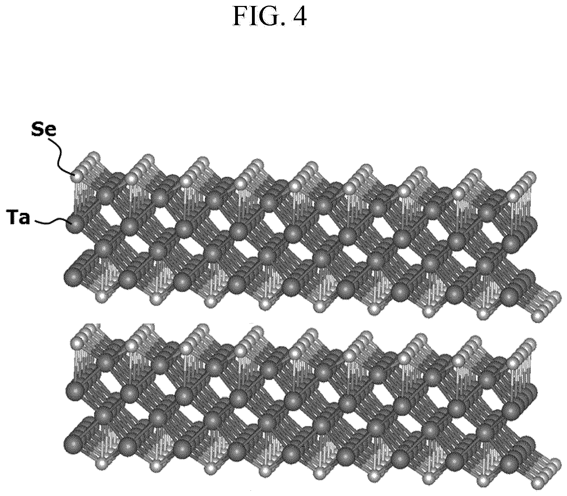

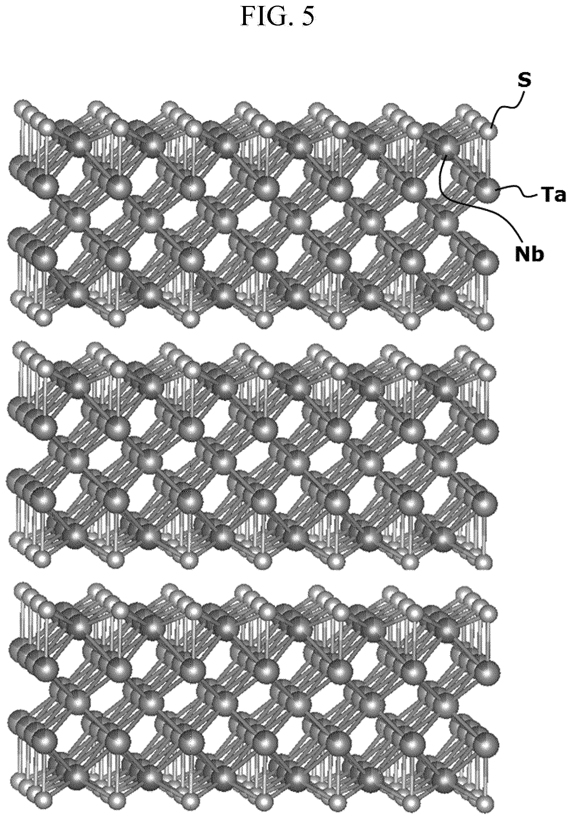

In some embodiments, the layered crystal structure of the compound may have a repeating unit structure which includes a top layer and a bottom layer consisting of chalcogen atoms and at least two (e.g., three to five) layers of transition metal atoms therein. For example, in case of $Hf_3Te_2$, the repeating unit structure has a total of five layers, among which the top and bottom layers are layers of Te atoms and the middle three layers are layers of Hf atoms (see FIG. 3). The two-dimensional electron gas layer may be present within the unit structure (e.g., between the layers of Hf atoms), and each repeating unit structure is bonded via van der Waals force. By way of another example, the layered crystal structure of $Ta_2Se$ has a repeating unit structure including six layers (see FIG. 4). Each of the top and bottom layers is a layer of Se atoms and the middle four layers are layers of Ta atoms. The two-dimensional electron gas layer may be present within the unit structure (e.g., between the layers of Ta atoms) and each repeating unit structure is bonded via the van der Waals force. By way of still another example, the layered crystal structure of $(Ta,Nb)_5S_2$ has a repeating unit structure including seven layers (see FIG. 5). Each of the top and bottom layers is a layer of S atoms and the middle five layers are layers of Ta atoms or layers of Nb atoms. The two-dimensional electron gas layer may be present within the unit structure (e.g., between the layers of Ta/Nb atoms) and each repeating unit structure is bonded via the van der Waals force. Therefore, the bonding energy between the repeating unit structures is very low and may be less than or equal to about 100 meV/Å$^2$, for example, less than or equal to about 10 meV/Å$^2$.

The aforementioned electrically conductive film includes the compound having a layered crystal structure and the two-dimensional electron gas layer, and thus it may show electrical conductivity as high as a pure metallic material together with high transparency. Moreover, the film may have excellent flexibility as the unit structure layers may slide therebetween in the layered crystal structure.

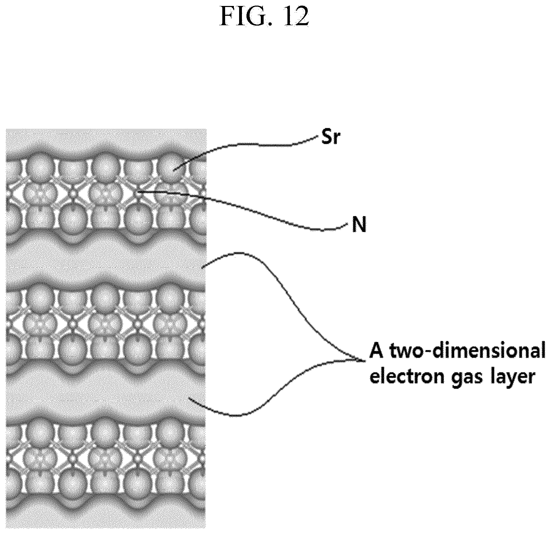

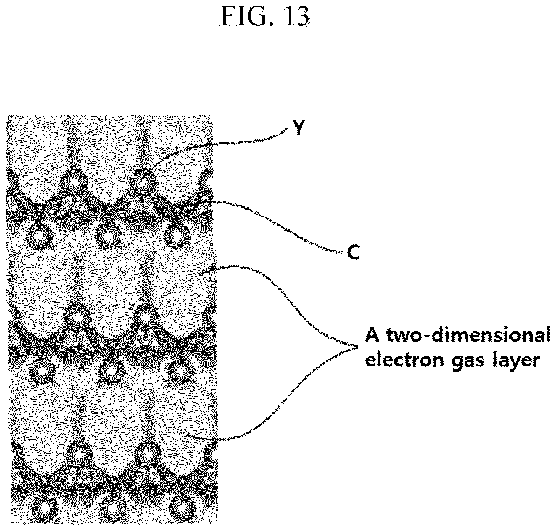

The two-dimensional electron gas layer included in the compound may be confirmed by the charge distribution of the given compound (i.e., the electron configuration in the atomic model of the compound) calculated by the simulation process. The simulation representing the charge distribution is carried out by the method known in the art (see Proc. R. Soc. A (2011) 467, 2066-2083). FIG. 12 and FIG. 13 show the charge distribution of strontium subnitride (Sr$_2$N) and yttrium subcarbide (Y$_2$C) obtained from the simulation. FIG. 12 and FIG. 13 confirm that these compounds have the two-dimensional electron gas layer.

The compound has conductivity that may be measured by Hall effect measurement due to the presence of the two-dimensional electron gas layer. The conductivity may be calculated from the electron concentration and the charge mobility. Due to the presence of the two-dimensional electron gas layer, the aforementioned compounds may exhibit behaviors in terms of conductivity that are similar to the metal. For example, as a temperature increases, scattering between electrons or scattering between the electrons and the interstices become more serious, and thus the aforementioned compounds may show higher resistance and lower conductivity.

Various researches have been made to develop a flexible transparent electrode material having high electrical conductivity and being transparent in the visible radiation range. Metals may have high electron density and high electrical conductivity. However, a metal thin film tends to react with oxygen in air to form an oxide on its surface, and such an oxidation phenomenon becomes more serious except with some precious metals such as Au, Ag, and Pt. Therefore, a metal-based electrode material or a conducting nanofiller material has disadvantages of considerably high contact resistance. In addition, the metallic material should have a decreased thickness in order to increase light transmittance (i.e., to secure the transparency), but when the thickness of the metal film decreases (for example, at a thickness of less than or equal to about 50 nm), the metal shows sharply increased sheet resistance. In addition, when the thickness of the metal film decreases to 10 nm or less, surface scattering of the electrons may cause decreased charge mobility and higher values of the sheet resistance and resistivity.

There has been another attempt to decrease surface contact resistance by using a ceramic material having a relatively high electrical conductivity and showing a decreased level of the surface oxidation. However, currently available conductive ceramic materials (e.g., ITO) cannot realize high conductivity and they generally show poor flexibility and supply of their raw materials is very unstable, and thus urgent needs to develop alternative materials still remain.

Meanwhile, transition metal dichalcogenides (that is, MX$_2$) such as MoS$_2$ have a layered crystal structure but show a low level of electrical conductivity, and thus it is very difficult to use them as a transparent conducting film. Specifically, as the absorption coefficient of MoS$_2$ is about 10$^6$/cm in the visible radiation range and the resistivity thereof is about 0.3-30 Ωcm. Therefore, the MoS$_2$ is a type of a semiconductor, and a product of its absorption coefficient and its resistivity is at least about 30,000, which is far greater than that of the aforementioned compound (i.e., 30).

In contrast, although the transparent electrically conducting films of the aforementioned embodiments include an inorganic material having a metal and a non-metallic element, they includes the two-dimensional electron gas layer in the unit structure layer or between the unit structure layers and thus may exhibit a very high level of conductivity at a very small thickness (i.e., when they are in the form of a very thin film). Without wishing to be bound by any theory, it is believed that the aforementioned electrically conductive films may exhibit very high conductivity with high transparency as they include electrons that are two-dimensionally confined in the layered crystal structure, and the electrons (in the two-dimensional elelctron gas layer) may move with high mobility even when the film is very thin. In addition, the electrically conductive film may exhibit high flexibility as the compound included therein has a layered crystal structure.

The layered crystal structure of the aforementioned compounds may belong to a trigonal system with a P-3m1 space group, a trigonal system with a R3-MH space group, a tetragonal system with a I4/MMM space group, or a hexagonal system with a P63/mcm space group. The types of the layered crystal structures of the examples of the aforementioned compounds are summarized in Table 3 presented below.

The compound may have a product of an absorption coefficient ($\alpha$) for light having a wavelength of about 550 nm at 25 °C and a resistivity value ($\rho$) thereof of less than or equal to about 30 Ω/□, for example, less than or equal to about 20 Ω/□, less than or equal to about 10 Ω/□, or less than or equal to about 5 Ω/□. Herein, the absorption coefficient and the resistivity are obtained from a computer simulation. The resistivity ($\rho$) is obtained by calculating the density of state (DOS) and the band structure around the Fermi level from the crystal structure of the corresponding rare earth element chalcogenide compounds. In addition, the absorption coefficient ($\alpha$) for a certain wavelength is calculated from the dielectric constant of the compound that is obtained by applying the Drude model and considering electron transition due to interband transition. As to simulation methodology for providing the absorption coefficient ($\alpha$) and the resistivity ($\rho$), it is possible to further refer to the Vienna Ab-initio Simulation Package (written by Georg Kresse and Jurgen Furthmuller, Institut fur Materialphysik, Universitat Wien, Sensengasse 8, A-1130 Wien, Austria, August 24, 2005, http://cms.mpi.univie.ac.at/VASP/). The aforementioned simulation procedures can be summarized as in Table 1.

Table 1

| Calculation | Simulation level | Calculation / simulation |
|---|---|---|
| Atom electron structure | DFT | Structure optimization<br>Band structure calculation |
| Conductive characteristic | Semi-classical Boltzmann transport (const. $\tau$) | Intraband transition<br>$\sigma \approx (e^2/4\pi^3)\, \tau \int dk\ v(k)\ v(k)\ (-\partial f/\partial\varepsilon) = ne^2\tau/m_{eff} = ne\mu$<br>$\rho = 1/\sigma$ |
| Dielectric characteristic | DFPT + Drude model | Interband transition<br>$\varepsilon(\omega) = \varepsilon_D(\omega) + \varepsilon_B(\omega) = \varepsilon_1(\omega) + i\,\varepsilon_2(\omega)$ |
| Optical characteristic | Ray optics | $n(\omega) + i\,k(\omega) = \varepsilon(\omega)^{\frac{1}{2}}$<br>Absorption coeff. $\alpha = 4\pi k/\lambda$ |
| Calculate $\rho$ $\alpha$ | | |
| DFT: density-functional theory<br>DFPT: density-functional perturbation theory<br>Drude model: free electron model for a solid<br>$\sigma$, $\tau$, $m_{eff}$, $\mu$, $\rho$: electrical conductivity, relaxation time, effective mass, mobility, resistivity<br>$\omega_p$ ($\omega_p'$): (screened) plasma frequency | | |

Hereinbelow, the description of Table 1 is explained in further detail.

In order to calculate a quantum mechanical state of a material, the first-principles calculation (a calculation made from a fundamental equation without using extrinsic parameters) based on the density-functional-theory (DFT) method (a method of solving a quantum mechanical equation by describing the electron distribution using an electron density function instead of a wave function) is performed to calculate the quantum mechanical state of an electron. The VASP (the Vienna Ab initio simulation package code, which is the first principle DFT code) is used to calculate the electron state. A candidate material group including a two-dimensional electron gas layer is selected from the Inorganic Crystal Structure Database (ICSD). The atomic structure information for the candidate material is input and the energy level of the electrons is calculated by simulation, and for such electrons, an energy density function and a state density function on a k-space of the electrons are calculated.

The electron structure calculated through the DFT computer simulation provides an E-k diagram (the band structure) and DOS (Density of State: electron state density, electron state density function per energy unit) information, making it possible to determine whether the given material is a metallic conductive material (DOS($E_F$) > 0) or a semi-conductor material (DOS($E_F$) = 0) depending on the presence of the DOS on the maximum energy level ($E_F$) available to the electrons.

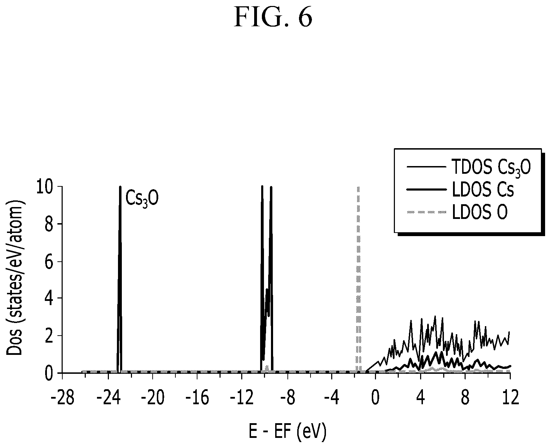

FIG. 6 shows the results of the DOS calculation for the $Cs_3O$ material, which confirms that the material has a positive value of the DOS at a position of $E_F$(E=0), and thus it is a metallic conducting material. Through the foregoing calculation of the electron structure, materials having metallic conductivity are selected first among the candidate materials having the two-dimensional electron gas layer, and for these selected materials, the electrically conducting properties and the transmittance properties thereof are calculated.

Calculation of conductivity through semi-classical Boltzmann transport model:

In order to predict the conductivity ($\sigma$) of a metallically conducting material, its conductive characteristics are estimated by introducing a semi-classical Boltzmann transport model. In this case, relaxation time of electrons ($\tau$: duration during which an electron can move without collision) is assumed to be constant (see Ashcroft and Mermin, Solid State Physics, published by Brooks and Cole, 1976, ISBN: 0030839939).

$$\text{Boltzmann-Transport}$$
$$\sigma = (e^2/4\pi^3)\, \tau \int dk \ v(k)\, v(k)\, (-\partial f/\partial E)$$

Herein, $\tau$ is a relaxation time of an electron, k is a state of the electron in the k-space, v(k) is a speed of the electron in the k state, f is the Fermi-Dirac distribution function, and E is energy.

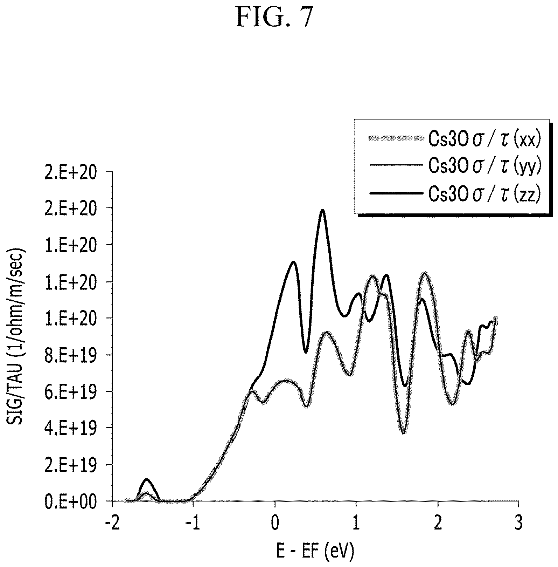

In this case, v(k) may be calculated from the E-k diagram, and $\sigma/\tau$ may be obtained from the above formula. The results are shown in FIG. 7.

Calculation of transmittance using DFPT + Drude model:

The mechanism determining the transmittance absorption of the conductive material may include intraband absorption due to plasma-like oscillation of free electrons and intraband absorption due to band-to-band transition of bound electrons. The quantum computational simulation process considering each of the mechanisms may be obtained by the process as set forth in Table 2 entitled "Simulation table for Optical Properties" (see Ashcroft and Mermin, Solid State Physics, published by Brooks and Cole, 1976, ISBN: 0030839939).

Table 2

| TEP | Category | Calculation | Results | Method (tool) |
|---|---|---|---|---|
| | Optical simulation | Interband transition | $\varepsilon B(w)= \varepsilon B1(w)+i\, \varepsilon\, B2(w)$ | DFT (VASP) |
| | Optical simulation | Plasma frequency intraband transition | $\varepsilon\, D(w)= \varepsilon\, D1(w)+i\, \varepsilon\, D2(w)$ | Boltzmann transport DFT (VASP) or post-processing |
| 0 | Optical simulation | Total dielectric constant refractive index | | Post-processing |
| 1 | Optical simulation | Reflectance absorption coefficient | Plasma freq. reflectance absorption co. transmittance | Post-processing |

Herein, B denotes a band, and D denotes a Drude model.

In this case, the relationships of the dielectric constant ($\varepsilon$), the refractive index (n), and the absorption coefficient ($\alpha$) of a solid are shown as follows. For the dielectric constant, both the interband transition related portion ($\varepsilon_{(Band)}$) and the intraband transition related portion ($\varepsilon_{(Drude)}$) should be considered.

$$\varepsilon(\omega) = \varepsilon_{(Drude)} + \varepsilon_{(Band)}$$

$$= \varepsilon_1(\omega) + i\, \varepsilon_2(\omega) \qquad \text{dielectric function}$$

$$( n + ik )^2 = \varepsilon(\omega) \qquad \text{refraction function}$$

$$\alpha(\omega) = 4\pi k/\lambda \qquad \text{absorption coefficient}$$

As set forth in the above conductivity calculation, the interband absorption may be calculated through the band structure as calculated in advance while the intraband absorption by the free electrons is calculated by the simulation as below through the conductivity and optical coefficient calculation based on the Drude modeling (see Jinwoong Kim, Journal of Applied Physics 110, 083501 2011).

$$\text{CGS UNIT}$$
$$\sigma(\omega) = \sigma_0 / [\, 1 - i\, \omega\tau\, ] \qquad AC\ conductivity$$

$$\sigma_0 = ne^2\tau/m \qquad\qquad \textit{DC conductivity}$$

$$\varepsilon(\omega) = 1 + i\,(4\pi/\omega)\,\sigma(\omega)$$

$$\omega_p^2\,\tau \quad = \sigma_0/\varepsilon_0 \qquad\qquad (si)$$
$$\qquad = 4\pi\,\sigma_0 \qquad\qquad (cgs)$$

$$\varepsilon(\omega) = 1 + i\,(4\pi/\omega)\,\sigma_0\,/\,[\,1 - i\,\omega\tau\,] = 1 - (4\pi\,\sigma_0/\omega)\,/\,[\,i + \omega\tau\,]$$
$$= 1 - (4\pi\,\sigma_0/\omega)\,(-i + \omega\tau)\,/\,[\,1 + (\omega\tau)^2\,]$$
$$= 1 - (\omega_p\tau)^2\,/\,[\,1 + (\omega\tau)^2\,]$$
$$+ i\,(\omega_p\tau)^2\,/\,[\omega\tau\,(1 + (\omega\tau)^2)]$$

$$\epsilon_1 = 1 - \frac{\omega_p^2\tau^2}{1 + \omega^2\tau^2} \qquad\qquad n = \frac{1}{\sqrt{2}}\left(\epsilon_1 + (\epsilon_1^2 + \epsilon_2^2)^{1/2}\right)^{1/2}$$

$$\epsilon_2 = \frac{\omega_p^2\tau^2}{\tau\omega(1 + \omega^2\tau^2)} \qquad\qquad \kappa = \frac{1}{\sqrt{2}}\left(-\epsilon_1 + (\epsilon_1^2 + \epsilon_2^2)^{1/2}\right)^{1/2}$$

$\omega$: frequency
$\omega_p$: plasma frequency
k: extinction coefficient

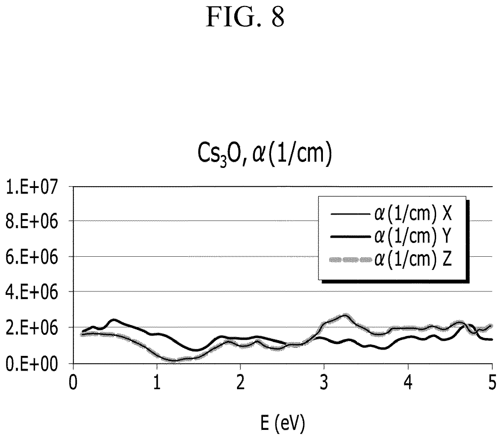

As set forth in the above, the calculation of the interband absorption and the intraband absorption makes it possible to calculate the dielectric function of the given material, and the optical constants thereof can be simulated therefrom. In the end, the reflectance (R), the absorption coefficient (a), and the transmittance (T) of the given material can be calculated therefrom. The results of calculating the absorption coefficient for $Cs_3O$ are shown in FIG. 8.

In case of the aforementioned compounds included in the transparent electrically conductive film according to the embodiments, the product of the absorption coefficient ($\alpha$) and the resistivity ($\rho$) may be less than or equal to about 30 $\Omega/\square$, for example, less than or equal to about 20 $\Omega/\square$, less than or equal to about 10 $\Omega/\square$, or less than or equal to about 5 $\Omega/\square$. By way of an example, the product of the absorption coefficient ($\alpha$) (e.g., for light having a wavelength of about 550 nm at 25 °C) and the resistivity ($\rho$) for some compounds are compiled in Table 3 as below.

Table 3

|  | Crystal structure | $\rho$ ($\Omega$/cm) | $\alpha$ (1/cm) | $\rho\alpha$ |
|---|---|---|---|---|
| $Ag_2F$ | P-3m1 (164), trigonal | 1.75E-06 | 1.62E+05 | 0.28 |
| $Cs_3O$ | P63/mcm (193), hexagonal | 1.01E-05 | 1.22E+05 | 1.24 |
| $Hf_3Te_2$ | I4/MMM (139), tetragonal | 4.15E-06 | 3.72E+05 | 1.54 |
| $Sr_2N$ | R3-MH (166), trigonal | 5.68E-06 | 2.97E+05 | 1.69 |
| $(Ta,Nb)_5S_2$ | I4/MMM (139), tetragonal | 3.65E-06 | 6.90E+05 | 2.52 |
| $Y_2C$ | R3-MH (166), trigonal | 7.49E-06 | 3.61E+05 | 2.70 |
| $Ti_2O$ | P-3m1 (164), trigonal | 5.61E-06 | 6.29E+05 | 3.53 |
| $Ba_2N$ | R3-MH (166), trigonal | 8.78E-06 | 4.15E+05 | 3.64 |
| $Nb_2C$ | R3-MH (166), trigonal | 5.52E-06 | 6.74E+05 | 3.72 |
| $Ba_3N$ | P63/mcm (193), hexagonal | 1.34E-05 | 2.88E+05 | 3.86 |

(continued)

|  | Crystal structure | $\rho$ ($\Omega$/cm) | $\alpha$ (1/cm) | $\rho\alpha$ |
|---|---|---|---|---|
| $Ta_2Se$ | I4/MMM (139), tetragonal | 7.72E-06 | 5.47E+05 | 4.23 |

The product of resistivity ($\rho$) and absorption coefficient ($\alpha$) may represent the product of sheet resistance ($R_s$) and transmittance (lnT) according to the following equation. Accordingly, the compound having a lower value of $\rho*\alpha$ may be advantageous for a material of the electrically conductive thin film.

$$e^{-\alpha t} = T \text{ (i.e., } \alpha t = -\ln T)$$

$$R_s = \rho/t$$

$\therefore$ $\rho*\alpha$= Rs * (-lnT)
$\alpha$: absorption coefficient
$\rho$: resistivity
T: transmittance (at $\lambda$=550nm)
t: thickness
$R_s$: sheet resistance

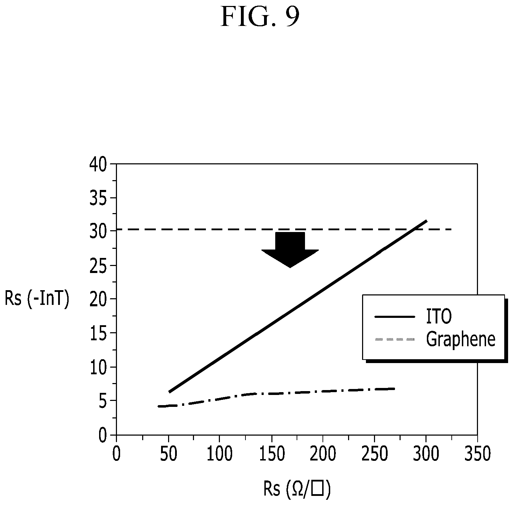

Generally, in order to increase the transmittance of the transparent electrode, the amount of the conductive filler should be decreased or the thickness of the electrode should be smaller, and this may cause an increase in the sheet resistance ($R_s$). FIG. 9 shows a graph wherein, for ITO and graphene, the value of $R_s$ * (-lnT) that can be used as a transparent electrode in the form of a continuous film is plotted with respect to the $R_s$. The results of FIG. 9 confirm that the ITO and the graphene cannot have a value of $R_s$ * (-lnT) of less than or equal to about 5. Meanwhile, the graphene may have a theoretical value of conductivity, but a thin film including the same tends to have many defects so that its actual conductivity is very low and its absorption of the visible radiation is very high. Therefore, the graphene cannot be used as the transparent electrodes.

By contrast, the compound included in the transparent electrically conductive film according to the aforementioned has the product of the absorption coefficient and the resistivity ($\rho*\alpha$) of less than or equal to about 30 $\Omega/\square$, for example, less than or equal to about 20 $\Omega/\square$, less than or equal to about 10 $\Omega/\square$, or less than or equal to about 5 $\Omega/\square$. Therefore, it may provide a transparent conductive thin film having high conductivity and excellent transparency (i.e., low sheet resistance and high light transmittance).

When the product of the absorption coefficient and the resistivity is less than or equal to about 30, the highest value of the sheet resistance may vary with the transmittance as shown in Table 4.

Table 4

| T (%) | $R_s$ ($\Omega/\square$) |
|---|---|
| 60 | Less than or equal to about 58.7 |
| 65 | Less than or equal to about 69.6 |
| 70 | Less than or equal to about 84.1 |
| 75 | Less than or equal to about 104.3 |
| 80 | Less than or equal to about 134.4 |
| 85 | Less than or equal to about 184.6 |
| 90 | Less than or equal to about 284.7 |
| 95 | Less than or equal to about 584.9 |
| 99 | Less than or equal to about 2985.0 |

In an embodiment, the transparent electrically conductive film may be prepared as a continuous deposited film via vapor deposition of the aforementioned compound or raw materials thereof. The vapor deposition may be carried out by a physical vapor deposition method such as thermal evaporation and sputtering, chemical vapor deposition (CVD), atomic layer deposition (ALD), or pulsed laser deposition (PLD). The deposition may be performed using any known or commercially available apparatus. The raw materials and the deposition conditions may vary with the types of the compound and the deposition method, but are not particularly limited. For example, the raw material may be an elemental powder or a compound thereof including the elements constituting the given compound or a mono- or polycrystalline sintered body thereof, but it is not limited thereto.

According to another embodiment, a bulk material including the above compound (e.g., a monocrystalline or polycrystalline sintered body of the aforementioned compound) or a pulverized powder thereof may be subjected to liquid phase exfoliation to produce a plurality of nanosheets, which are then brought into contact with each other so as to provide an electrical connection, providing an electrically conductive thin film. The aforementioned compound may have binding energy between unit structures thereof that may be less than or equal to about 100 meV/$\text{Å}^2$ in its layered crystal structure, and thus the bulk material or a powder thereof may be prepared as a nanosheet including one or at least two unit structure layers in a suitable manner such as liquid phase exfoliation. In the liquid phase exfoliation, the bulk material or the powder thereof may be subjected to ultra-sonication in an appropriate solvent. Examples of the solvent suitable for the liquid phase exfoliation may include, but are not limited to, water, alcohol (isopropyl alcohol, ethanol, or methanol), N-methyl pyrrolidone (NMP), hexane, benzene, dichlorobenzene, toluene, chloroform, diethylether, dichloromethane (DCM), tetrahydrofuran (THF), ethyl acetate (EtOAc), acetone, dimethyl formamide (DMF), acetonitrile (MeCN), dimethyl sulfoxide (DMSO), ethylene carbonate, propylene carbonate, γ-butyrolactone, γ-valerolactone, a perfluorinated aromatic solvent (e.g., hexafluorobenzene, octafluorotoluene, pentafluorobenzonitrile, and pentafluoropyridine), or a combination thereof.

An additive such as a surfactant may be added to the solvent in order to facilitate the exfoliation and prevent the exfoliated nanosheets from being agglomerated. Examples of the surfactant may include, but are not limited to, sodium dodecyl sulfate (SDS) and sodium dodecyl benzenesulfonate (SDBS). The ultrasonication may be performed by using any conventional or commercially available ultrasonication device, and the conditions thereof (e.g., ultrasonication time) are not particularly limited, but may be appropriately selected considering a solvent used and a powder concentration in the solvent. For example, the ultrasonication may be performed for greater than or equal to about 1 hour, for example, for about 1 hour to about 100 hours, but is not limited thereto. The powder concentration in the solvent may be greater than or equal to about 0.01 g/ml, for example, within a range from about 0.01 g/ml to about 10 g/ml, but is not limited thereto.

In order to promote the exfoliation, lithium atoms may be intercalated into the compound having a layered crystal structure. According to an embodiment, the compound (e.g., the transition metal rich chalcogenide) is immersed in an alkyl lithium (e.g., butyllithium) solution in an aliphatic hydrocarbon solvent such as hexane to intercalate lithium atoms into the compound, and the intercalated product thus obtained is subjected to ultrasonication to provide a plurality of nanosheets including the compound. For example, by putting the intercalated product in water, water and the intercalated lithium ion may react to generate hydrogen between the layers of the crystal structure, so as to accelerate the interlayer separation. The obtained nanosheets are separated according to an appropriate method (e.g., centrifugation) and washed.

The obtained nanosheets are physically brought into contact with each other so as to provide electrical connection, and thereby they may be prepared as a transparent electrically conductive film. The length of nanosheets is not particularly limited, but may be appropriately adjusted. For example, the nanosheet may have a length of less than or equal to about 500 μm, for example, of about 10 nm to about 10 μm, but is not limited thereto. When the nanosheets are physically connected to form a film being as thin as possible, the prepared film may show enhanced light transmittance. The film thus prepared may have a thickness of less than or equal to about 100 nm, for example less than or equal to about 5 nm, showing a very high level of transmittance. The obtained film may have high transmittance (e.g., greater than or equal to about 80 %, or greater than or equal to about 85 %) when the thickness is less than or equal to about 100 nm, for example, less than or equal to about 5 nm. The obtained film may have coverage of greater than or equal to about 20 %, for example, greater than or equal to about 50 %. The nanosheets may be used to form a film in any conventional method. For example, the formation of the film may be carried out by dip coating, spray coating, printing after forming an ink or a paste, and the like.

According to one embodiment, the manufactured nanosheets are added to deionized water, and the resultant dispersion is ultrasonicated again. An organic solvent that is not miscible with water (e.g., an aromatic hydrocarbon such as xylene or toluene) is added to the ultrasonicated dispersion. When the mixture thus obtained is shaken, a thin film including nanosheets is formed at the interface between the water and the organic solvent. When a clean, wetted, and oxygen plasma-treated glass substrate is slightly dipped to the interface and slowly taken out, the thin film including nanosheets is spread out on the substrate at the interface. The thickness of the thin film may be adjusted by controlling the concentration of the nanosheets per surface area of the interface between water and the organic solvent and a speed and/or an angle when the substrate is taken out.

The electrically conductive thin film shows high conductivity, enhanced light transmittance, and excellent flexibility, and thus may replace an electrode including a transparent conductive oxide such as ITO, ZnO, and the like and a transparent film including a Ag nanowire.

Another embodiment provides an electronic device including the above electrically conductive thin film. The electrically conductive thin film is the same as described above. The electronic device may include, for example, a flat panel display (e.g., LCD, LED, and OLED), a touch screen panel, a solar cell, an e-window, a heat mirror, a transparent transistor, or a flexible display, but is not limited thereto.

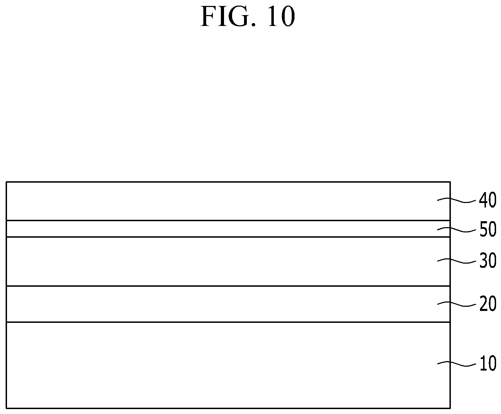

FIG. 10 is a cross-sectional view of an organic light emitting diode device including an electrically conductive thin film according to one embodiment.

An organic light emitting diode device according to one embodiment includes a substrate 10, a lower electrode 20, an upper electrode 40 facing the lower electrode 20, and an emission layer 30 interposed between the lower electrode 20 and the upper electrode 40.

The substrate 10 may be made of an inorganic material such as glass, or an organic material such as polycarbonate, polymethyl methacrylate, polyethylene terephthalate, polyethylene naphthalate, polyamide, polyethersulfone, or a combination thereof, or a silicon wafer.

One of the lower electrode 20 and the upper electrode 40 is a cathode and the other is an anode. For example, the lower electrode 20 may be an anode and the upper electrode 40 may be a cathode.

At least one of the lower electrode 20 and the upper electrode 40 may be a transparent electrode. When the lower electrode 10 is a transparent electrode, the organic light emitting diode device may have a bottom emission structure in which light is emitted toward the substrate 10, while when the upper electrode 40 is a transparent electrode, the organic light emitting diode device may have a top emission structure in which light is emitted away from the substrate 10. In addition, when the lower electrode 20 and upper electrode 40 are both transparent electrodes, light may be emitted toward the substrate 10 and away from the substrate 10.

The transparent electrode may include the above electrically conductive thin film. The electrically conductive thin film is the same as described above. The electrically conductive thin film may have high electron density and low work function and thus may be advantageously utilized in the cathode of the OLED requiring low work function. By using the electrically conductive thin film, the conventional LiF/Al or MgAg alloy may be substituted to a single material.

The emission layer 30 may be made of an organic material inherently emitting one among three primary colors such as red, green, blue, and the like, or a mixture of an inorganic material with the organic material, for example, a polyfluorene derivative, a (poly)paraphenylene vinylene derivative, a polyphenylene derivative, a polyvinylcarbazole, a polythiophene derivative, or a compound prepared by doping these polymer materials with a perylene-based pigment, a coumarin-based pigment, a rhodamine -based pigment, rubrene, perylene, 9,10-diphenylanthracene, tetraphenylbutadiene, Nile red, coumarin, quinacridone, and the like. An organic light emitting device displays a desirable image by a special combination of primary colors emitted by an emission layer therein.

The emission layer 30 may emit white light by combining basic colors such as three primary colors of red, green, and blue, and in this case, the color combination may emit white light by combining the colors of adjacent pixels or by combining colors laminated in a perpendicular direction.

An auxiliary layer 50 may be positioned between the emission layer 30 and the upper electrode 40 to improve luminous efficiency of the emission layer 30. In the drawing, the auxiliary layer 50 is shown only between the emission layer 30 and the upper electrode 40, but it is not limited thereto. The auxiliary layer 50 may be positioned between the emission layer 30 and the lower electrode 20, or between the emission layer 30 and the upper electrode 40 and between the emission layer 30 and the lower electrode 20.

The auxiliary layer 50 may include an electron transport layer (ETL) and a hole transport layer (HTL) for balancing between electrons and holes, an electron injection layer (EIL), a hole injection layer (HIL) for reinforcing injection of electrons and holes, and the like. It may include one or more layers selected therefrom.

In addition, an example of applying the electrically conductive thin film to an organic light emitting diode device is illustrated, but the electrically conductive thin film may be used as an electrode for all electronic devices including a transparent electrode without a particular limit, for example, a pixel electrode and/or a common electrode for a liquid crystal display (LCD), an anode and/or a cathode for an organic light emitting diode device, a display electrode for a plasma display device, and a transparent electrode for a touch panel device.

Hereinafter, the embodiments are illustrated in more detail with reference to examples. These examples, however, are not in any sense to be interpreted as limiting the scope of this disclosure.

[Examples]

Example 1: Preparation of a $Hf_3Te_2$ thin film

A Hf powder and a $HfTe_2$ powder are mixed at a molar ratio of 2:1. The resulting mixture is sintered under a pressure of 900 kgf/cm$^2$ at a temperature of 1000 °C for about one hour to provide a sintered body having a density of 95 % of its ideal density.

Pulsed laser deposition (PLD) is conducted on an $Al_2O_3$ substrate under the following conditions using the sintered body prepared above as a target and using a Nd/YAG laser.

PLD device: PLD 5000 Deposition Systems, PVD Products
Output: 60 mJ/cm$^2$
Time: 20 min
Substrate temperature: 600 °C
Vacuum degree: 2* $10^{-6}$ Pa

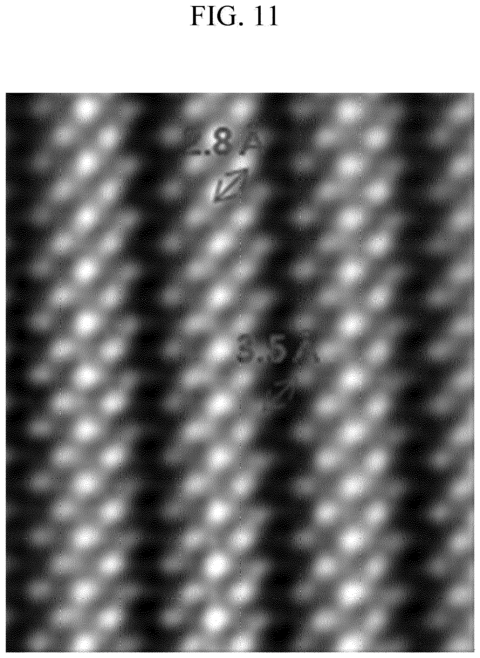

The $Hf_3Te_2$ vapor deposited film thus prepared has a thickness of about 20 nm. The TEM image of the vapor deposited film thus prepared is shown in FIG. 11, which confirms that the $Hf_3Te_2$ film thus formed has a layered crystal structure.

Example 2: Preparation of thin film including $Hf_3Te_2$ nanosheets

The $Hf_3Te_2$ sintered body prepared from Example 1 is pulverized and the obtained powder is dispersed in 1.6 M of butyllithium solution in hexane including butyllithium dissolved therein, and the resulting dispersion is agitated for 72 hours. Then, the powder is taken out from the dispersion and washed with hexane and dried under an argon atmosphere to obtain lithium intercalated powder of $Hf_3Te_2$. 15-20 g of lithium intercalated powder of $Hf_3Te_2$ is placed in a vial in a glove box, and then 5-10 ml of water is added thereto and the resulting mixture is subjected to ultrasonication for one hour. With the generation of hydrogen gas, interlayer separation occurs to provide $Hf_3Te_2$ nanosheets.

The nanosheets thus obtained are centrifuged and the precipitate is washed with water until it shows a pH of about 7 and centrifuged again.

The obtained nanosheet precipitate is placed in a vial and added with 3 ml of deionized water and ultrasonicated. 2-3 ml of toluene is added thereto, and the vial is stirred to provide a thin film including nanosheets at the interface between the aqueous layer and the toluene layer. A glass substrate treated with oxygen plasma is slightly dipped into the interface and pulled up so that a film including the $Hf_3Te_2$ nanosheets present at the interface is spread on the glass substrate.

Example 3: Preparation of the sintered body of titanium suboxide ($Ti_2O$) and a thin film formation thereof

A Ti powder (>99 %, Aldrich) and a $TiO_2$ powder (99.9 %, Aldrich) are weighed in an amount such that the mole ratio of titanium to oxygen is 2:1 (Ti:O) and are mixed well using a mortar. In order to facilitate the deposition, the mixed powder is placed in a metal mold and pelletized in a shape of a coin. The pellet thus obtained is placed in a glass tube, which is then vacuum-sealed. The vacuum sealed tube is put into an electric furnace and heat-treated at 700 °C for 24 hours. The heat treated pellet is pulverized using a mortar and the pulverized product is sintered using spark plasma sintering (SPS) equipment under the conditions of 850 °C/80 MPa for 5 minutes. The synthesized polycrystalline bulk material has a density of 80 % based on its ideal density and its conductivity is measured to be 5600 S/cm, which may further increase when the material is prepared as a monocrystalline bulk sample.

An X-ray diffraction analysis is conducted for the prepared bulk material and the results confirm the synthesis of titanium suboxide ($Ti_2O$).

The bulk material is used to form a thin film in the same manner as set forth in Example 1 and Example 2.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**Claims**

1. An electronic device comprising a transparent electrode, **characterized in that** the transparent electrode comprises an electrically conductive film comprising a compound having a layered crystal structure, wherein the compound is selected from

   a transition metal suboxide represented by $M_2O$, wherein M includes one of Sc, Y, Ti, Zr, Hf, V, Nb, Ta, Cr, Mo, W, Mn, Tc, Re, Ag and a combination thereof;
   an alkali metal suboxide represented by $A_3O$, $A_2O$, $A_6O$, or $A_7O$, wherein A is Cs, Rb, K, Na, or a combination thereof;
   an alkali earth metal subnitride represented by $AE_2N$, wherein AE is Mg, Ba, or a combination thereof, or $AE_3N$,

wherein AE is Mg, Ca, Sr, Ba, or a combination thereof;
a transition element subcarbide represented by $M_2C$ or $M_4C$, wherein M is Sc, Y, Ti, Zr, Hf, V, Nb, Ta, Cr, Mo, W, Mn, Tc, Re, Ag, or a combination thereof;
a transition metal rich chalcogenide represented by $M_3E_2$, $M_2E$, $M_5E$, $M_5E_2$, $M_4E_3$, or ME, wherein M is Sc, Y, Ti, Zr, Hf, V, Nb, Ta, Cr, Mo, W, Mn, Tc, Re, Ag, or a combination thereof, and E is S, Se, or Te; or
a transition metal subhalide represented by $M_2X$ or MX, wherein M is Sc, Y, Ti, Zr, Hf, V, Nb, Ta, Mn, Tc, Re, Ag, or a combination thereof, and X is F, Cl, Br, or I.

2. The electronic device of claim 1, wherein the electrically conductive film has transmittance of greater than or equal to 80 % for light of 550 nm at a thickness of 100 nm or less.

3. The electronic device of claim 1 or 2, wherein the compound has a product of an absorption coefficient $\alpha$ for light having a wavelength of 550 nm at 25 °C and a resistivity value $\rho$ thereof of less than or equal to 30 $\Omega/\square$.

4. The electronic device of claim 3, wherein the compound has a product of an absorption coefficient $\alpha$ for light having a wavelength of 550 nm at 25 °C and a resistivity value $\rho$ thereof of less than or equal to 5 $\Omega/\square$.

5. The electronic device of any of claims 1-4, wherein the layered crystal structure belongs to a trigonal system with a P-3m1 space group, a trigonal system with a R3-MH space group, a tetragonal system with a I4/MMM space group, or a hexagonal system with a P63/mcm space group.

6. The electronic device of any of claims 1-5, wherein the compound has a two-dimensional electron gas layer.

7. The electronic device of claim 6, wherein the two-dimensional electron gas layer is present between repeating unit structures of the compound or within a repeating unit structure of the compound.

8. The electronic device of any of claims 1-7, wherein the binding energy between the unit structures of the compound is less than or equal to 100 meV/Å$^2$.

9. The electronic device of any of claims 1-8, wherein the compound is selected from $Ag_2F$, $CS_3O$, $Hf_3Te_2$, $(Ta, Nb)_5S_2$, $Y_2C$, $Ti_2O$, $Ba_2N$, $Nb_2C$, $Ba_3N$, $Ta_2Se$, and a combination thereof.

10. The electronic device of any of claims 1-9, which has a thickness of less than or equal to 100 nm.

11. The electronic device of any of claims 1-10, which comprises a continuous vapor deposited film including the compound.

12. The electronic device of any of claims 1-10, which comprises a plurality of nanosheets including the compound.

13. The electronic device of any of claims 1-12, wherein the electronic device is a flat panel display, a touch screen panel, a solar cell, an e-window, an electrochromic mirror, a heat mirror, a transparent transistor, or a flexible display.

**Patentansprüche**

1. Elektronische Vorrichtung, umfassend eine transparente Elektrode, **dadurch gekennzeichnet, dass** die transparente Elektrode eine elektrisch leitfähige Folie umfasst, umfassend eine Verbindung mit einer geschichteten Kristallstruktur, wobei die Verbindung ausgewählt ist aus:

einem Übergangsmetallsuboxid, dargestellt durch $M_2O$, wobei M eines der folgenden Sc, Y, Ti, Zr, Hf, V, Nb, Ta, Cr, Mo, W, Mn, Tc, Re, Ag und einer Kombination davon aufweist;
einem Alkalimetallsuboxid, dargestellt durch $A_3O$, $A_2O$, $A_6O$ oder $A_7O$, wobei A Cs, Rb, K, Na oder eine Kombination davon ist;
einem Alkalierdmetallsubnitrid, dargestellt durch $AE_2N$, wobei AE Mg, Ba oder eine Kombination davon ist, oder $AE_3N$, wobei AE Mg, Ca, Sr, Ba oder eine Kombination davon ist;
einem Übergangselementsubcarbid, dargestellt durch $M_2C$ oder $M_4C$, wobei M Sc, Y, Ti, Zr, Hf, V, Nb, Ta, Cr, Mo, W, Mn, Tc, Re, Ag oder eine Kombination davon ist;
einem an Übergangsmetall reichen Chalkogenid, dargestellt durch $M_3E_2$, $M_2E$, $M_5E$, $M_5E_2$, $M_4E_3$ oder ME,

wobei M Sc, Y, Ti, Zr, Hf, V, Nb, Ta, Cr, Mo, W, Mn, Tc, Re, Ag oder eine Kombination davon ist, und wobei E S, Se oder Te ist; oder

einem Übergangsmetallsubhalid, dargestellt durch $M_2X$ oder MX, wobei M Sc, Y, Ti, Zr, Hf, V, Nb, Ta, Mn, Tc, Re, Ag oder eine Kombination davon ist, und wobei X F, Cl, Br oder I ist.

2. Elektronische Vorrichtung nach Anspruch 1, wobei die elektrisch leitfähige Folie für Licht mit 550 nm bei einer Dicke von 100 nm oder weniger einen Transmissionsgrad von größer oder gleich 80% aufweist.

3. Elektronische Vorrichtung nach Anspruch 1 oder 2, wobei die Verbindung ein Produkt eines Absorptionskoeffizienten $\alpha$ für ein Licht mit einer Wellenlänge von 550 nm bei 25 °C und eines Widerstandswertes $\rho$ davon von kleiner oder gleich 30 $\Omega$/ aufweist.

4. Elektronische Vorrichtung nach Anspruch 3, wobei die Verbindung ein Produkt eines Absorptionskoeffizienten $\alpha$ für ein Licht mit einer Wellenlänge von 550 nm bei 25 °C und eines Widerstandswertes $\rho$ davon von kleiner oder gleich 5 $\Omega$/ aufweist.

5. Elektronische Vorrichtung nach einem der Ansprüche 1 bis 4, wobei die geschichtete Kristallstruktur einem trigonalen System mit einer P-3m1 Raumgruppe, einem trigonalen System mit einer R3-MH Raumgruppe, einem tetragonalen System mit einer I4/MMM Raumgruppe oder einem hexagonalen System mit einer P63/mcm Raumgruppe angehört.

6. Elektronische Vorrichtung nach einem der Ansprüche 1 bis 5, wobei die Verbindung eine zweidimensionale Elektronengasschicht aufweist.

7. Elektronische Vorrichtung nach Anspruch 6, wobei sich die zweidimensionale Elektronengasschicht zwischen Wiederholungseinheitenstrukturen der Verbindung oder in einer Wiederholungseinheitenstruktur der Verbindung befindet.

8. Elektronische Vorrichtung nach einem der Ansprüche 1 bis 7, wobei die Bindungsenergie zwischen den Einheitenstrukturen der Verbindung kleiner oder gleich 100 meV/$\text{Å}^2$ ist.

9. Elektronische Vorrichtung nach einem der Ansprüche 1 bis 8, wobei die Verbindung ausgewählt ist aus $Ag_2F$, $Cs_3O$, $HF_3Te_2$ $(Ta, Nb)_5S_2$, $Y_2C$, $Ti_2O$, $Ba_2N$, $Nb_2C$, $Ba_3N$, $Ta_2Se$ und einer Kombination davon.

10. Elektronische Vorrichtung nach einem der Ansprüche 1 bis 9, mit einer Dicke von kleiner oder gleich 100 nm.

11. Elektronische Vorrichtung nach einem der Ansprüche 1 bis 10, die eine mittels kontinuierlicher Gasphasenabscheidung hergestellte Folie umfasst, welche die Verbindung aufweist.

12. Elektronische Vorrichtung nach einem der Ansprüche 1 bis 10, die eine Mehrzahl von Nanofolien umfasst, welche die Verbindung aufweisen.

13. Elektronische Vorrichtung nach einem der Ansprüche 1 bis 12, wobei die elektronische Vorrichtung eine Flachbildschirmanzeige, ein Touchscreen, eine Solarzelle, ein E-Fenster, ein Heat Mirror, ein transparenter Transistor oder ein flexibles Display ist.

**Revendications**

1. Dispositif électronique comprenant une électrode transparente, **caractérisé en ce que** l'électrode transparente comprend un film électroconducteur comprenant un composé ayant une structure cristalline en couches, le composé étant choisi parmi

un sous-oxyde de métal de transition représenté par $M_2O$, M comprenant l'un parmi Sc, Y, Ti, Zr, Hf, V, Nb, Ta, Cr, Mo, W, Mn, Tc, Re, Ag et une combinaison associée ;

un sous-oxyde de métal alcalin représenté par $A_3O$, $A_2O$, $A_6O$, ou $A_7O$, A étant Cs, Rb, K, Na, ou une combinaison associée ;

un sous-nitrure de métal alcalino-terreux représenté par $AE_2N$, AE étant Mg, Ba ou une combinaison associée, ou $AE_3N$, AE étant Mg, Ca, Sr, Ba ou une combinaison associée ;

un sous-carbure d'élément de transition représenté par $M_2C$ ou $M_4C$, M étant Sc, Y, Ti, Zr, Hf, V, Nb, Ta, Cr, Mo, W, Mn, Tc, Re, Ag, ou une combinaison associée ;
un chalcogénure riche en métaux de transition représenté par $M_3E_2$, $M_2E$, $M_5E$, $M_5E_2$, $M_4E_3$ ou ME, M étant Sc, Y, Ti, Zr, Hf, V, Nb, Ta, Cr, Mo, W, Mn, Tc, Re, Ag, ou une combinaison associée, et E étant S, Se ou Te ; ou un sous-halogénure de métal de transition représenté par $M_2X$ ou MX, M étant Sc, Y, Ti, Zr, Hf, V, Nb, Ta, Mn, Tc, Re, Ag, ou une combinaison associée, et X étant F, Cl, Br ou I.

2. Dispositif électronique selon la revendication 1, le film électroconducteur ayant un facteur de transmission supérieur ou égal à 80 % pour une lumière de 550 nm à une épaisseur de 100 nm ou moins.

3. Dispositif électronique selon la revendication 1 ou 2, le composé ayant un produit d'un coefficient d'absorption $\alpha$ pour une lumière ayant une longueur d'onde de 550 nm à 25 °C et une valeur de résistivité $\rho$ inférieure ou égale à 30 $\Omega/\square$.

4. Dispositif électronique selon la revendication 3, le composé ayant un produit d'un coefficient d'absorption $\alpha$ pour une lumière ayant une longueur d'onde de 550 nm à 25 °C et une valeur de résistivité $\rho$ inférieure ou égale à 5 $\Omega/\square$.

5. Dispositif électronique selon l'une quelconque des revendications 1 à 4, la structure cristalline en couches appartenant à un système trigonal avec un groupe spatial P-3m1, un système trigonal avec un groupe spatial R3-MH, un système tétragonal avec un groupe spatial I4/MMM, ou un système hexagonal avec un groupe spatial P63/mcm.

6. Dispositif électronique selon l'une quelconque des revendications 1 à 5, le composé ayant une couche de gaz électronique bidimensionnelle.

7. Dispositif électronique selon la revendication 6, la couche bidimensionnelle d'électrons gazeux étant présente entre des structures unitaires répétitives du composé ou dans une structure unitaire répétitive du composé.

8. Dispositif électronique selon l'une quelconque des revendications 1 à 7, l'énergie de liaison entre les structures unitaires du composé étant inférieure ou égale à 100 meV/Å$^2$.

9. Dispositif électronique selon l'une quelconque des revendications 1 à 8, le composé étant choisi parmi $Ag_2F$, $Cs_3O$, $Hf_3Te_2$, $(Ta, Nb)_5S_2$, $Y_2C$, $Ti_2O$, $Ba_2N$, $Nb_2C$, $Ba_3N$, $Ta_2Se$, et une combinaison associée.

10. Dispositif électronique selon l'une quelconque des revendications 1 à 9, ayant une épaisseur inférieure ou égale à 100 nm.

11. Dispositif électronique selon l'une quelconque des revendications 1 à 10, comprenant un film continu déposé en phase vapeur comprenant le composé.

12. Dispositif électronique selon l'une quelconque des revendications 1 à 10, comprenant une pluralité de nanofeuilles comprenant le composé.

13. Dispositif électronique selon l'une quelconque des revendications 1 à 12, le dispositif électronique étant un écran plat, un écran tactile, une cellule solaire, une fenêtre électronique, un miroir électrochromique, un miroir thermique, un transistor transparent ou un écran flexible.

FIG. 1

FIG. 2

FIG. 3

FIG. 4

FIG. 5

FIG. 6

FIG. 7

FIG. 8

Cs₃O, α(1/cm)

# FIG. 9

FIG. 10

# FIG. 11

FIG. 12

Sr

N

A two-dimensional electron gas layer

# FIG. 13

Y

C

A two-dimensional
electron gas layer

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0905273 A

**Non-patent literature cited in the description**

- **INUMARU et al.** *J. All. Com.,* 2004, vol. 372
- *Proc. R. Soc. A,* 2011, vol. 467, 2066-2083
- **ASHCROFT ; MERMIN.** Solid State Physics. Brooks and Cole, 1976
- **JINWOONG KIM.** *Journal of Applied Physics,* 2011, vol. 110, 083501